# EUROPEAN PATENT APPLICATION

(11) **EP 4 717 436 A1**
(43) Date of publication of application: **01.04.2026**
(21) Application number: 25203914.4
(22) Date of filing: 23.09.2025
(51) Int. Cl.: B29C 49/00, B29C 49/06, B29C 49/48, B29C 49/56, B29C 49/12, B29C 49/02

(54) **MOLD DEVICE**

(30) Priority: 25.09.2024 JP 2024166683
(71) Applicant: Sumitomo Heavy Industries, Ltd., Tokyo 141-6025 (JP)
(72) Inventor: SATO, Takayuki, Chiba, 263-0001, (JP); TAKAHASHI, Rei, Chiba, 263-0001, (JP)
(74) Representative: Louis Pöhlau Lohrentz

(57) **Abstract**

A mold device (20) capable of reducing the generation of burrs is provided. A mold device (20) includes a plurality of sets of blow split molds (22) that are disposed side by side in an opening and closing direction, in which one set of blow split mold (22), when closed, forms a blow molding female mold (27) for blow molding, and, when opened, allows a molding product (600) to be removed therefrom; and an interposed member (28) that is interposed between one set of blow split mold (22) of the plurality of sets of blow split molds (22) and the other set of blow split mold (22) of the plurality of sets of blow split molds (22) in a case where the blow split mold (22) is closed.

## Description

### BACKGROUND OF THE INVENTION

### Field of the Invention

The present invention relates to a mold device.

### Description of Related Art

For example, an injection blow molding machine described in Japanese Patent No. 4283181 has a stationary platen fixed to a support frame, a movable platen slidably attached to a guide member on the support frame, and an intermediate mold support frame slidably attached to the guide member between the stationary platen and the movable platen. The injection blow molding machine described in Japanese Patent No. 4283181 is an apparatus that performs a process of molding a preform as an intermediate molding product having a test tube shape by injection molding and a process of molding the preform into a final molding product by blow molding. In addition, in the injection blow molding machine described in Japanese Patent No. 4283181, injection molding is performed at an injection station between the stationary platen and the intermediate mold support frame, and blow molding is performed at a blow station between the movable platen and the intermediate mold support frame.

A movable blow split mold that forms a blow mold for blow molding, that is, a blow molding female mold is attached to a mold attachment surface of the movable platen in the injection blow molding machine described in Japanese Patent No. 4283181. The movable blow split mold includes a drive-side movable portion and a driven-side movable portion, and the drive-side movable portion and the driven-side movable portion are moved in a lateral direction by a split mold driving cylinder device serving as a split mold driving device. In this case, the drive-side movable portion is connected to a piston rod of the split mold driving cylinder device, and is directly moved by the split mold driving cylinder device, and the driven-side movable portion is connected to the drive-side movable portion of the other set, and is moved in a direction facing the drive-side movable portion of the own set. The split mold driving cylinder device is, for example, a pneumatic cylinder device, and is operated by compressed air.

### SUMMARY OF THE INVENTION

When the closing force of split molds is weak, there is a possibility that a large gap may be generated between the split molds when air is blown into the split molds closed to perform the blow molding. For example, in a case where a device that performs the opening and closing of the split molds is a pneumatic cylinder device, the closing force of the split molds is weakened compared to a case where the opening and closing of the split molds is performed using, for example, a ball screw. In a case where the gap generated between the split molds is large enough to allow the resin to overflow, there is a possibility that burrs may be generated in the final molding product.

An object of the present invention is to provide a mold device capable of reducing the generation of burrs.

The present invention that has completed under such an above object is a mold device including: a plurality of sets of blow split molds that are disposed side by side in an opening and closing direction, in which one set of blow split mold, when closed, forms a blow molding female mold for blow molding, and, when opened, allows a molding product to be removed therefrom; and an interposed member that is interposed between one set of blow split mold of the plurality of sets of blow split molds and the other set of blow split mold of the plurality of sets of blow split molds in a case where the blow split mold is closed.

Here, the blow split mold may be opened in a case where the interposed member is retreated in a direction intersecting the opening and closing direction.

In addition, a gap between the blow split mold and the interposed member in a case where the blow split mold is closed may be 0.03 (mm) or more and less than 0.09 (mm).

In addition, a gap between the blow split mold and the interposed member in a case where the blow split mold is closed may be 0.03 (mm) or more and 0.05 (mm) or less.

In addition, the blow split mold may be opened and closed by a pneumatic cylinder device.

In addition, there may be two sets of the blow split molds, and the interposed member may be interposed between the two sets of blow split molds.

According to the present invention, it is possible to provide the mold device capable of reducing the generation of burrs.

### BRIEF DESCRIPTION OF THE DRAWINGS

FIG. 1 is a view showing an example of a cross section of an injection blow molding machine according to a first embodiment as viewed in an up-down direction.
FIG. 2 is a view of an example of a cross section of the injection blow molding machine according to the first embodiment as viewed in a second direction.
FIG. 3A is a view showing an example of a cross section before a final molding product is molded. FIG. 3B is a view showing an example of a cross section after the final molding product is molded.
FIG. 4 is an example of a view of the injection blow molding machine as viewed in the direction of an IV portion in FIG. 2.
FIG. 5 is a view showing an example of a cross section of a V-V portion of FIG. 4.
FIG. 6 is a view showing an example of a cross section of the V-V portion of FIG. 4.
FIG. 7 is a view showing a relationship between the dimension of a gap D and each of poor appearance, generation of abrasive powder, and burr defects in the final molding product.

### DETAILED DESCRIPTION OF THE INVENTION

Hereinafter, embodiments of the present invention will be described in detail with reference to the accompanying drawings.

### <First Embodiment>

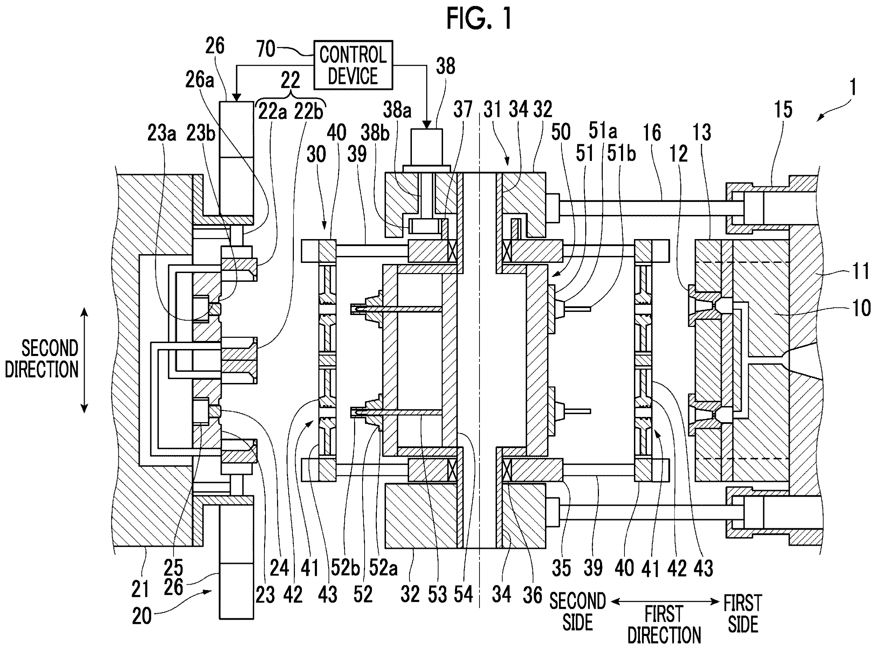

FIG. 1 is a view of an example of a cross section of an injection blow molding machine 1 according to a first embodiment as viewed in an up-down direction.

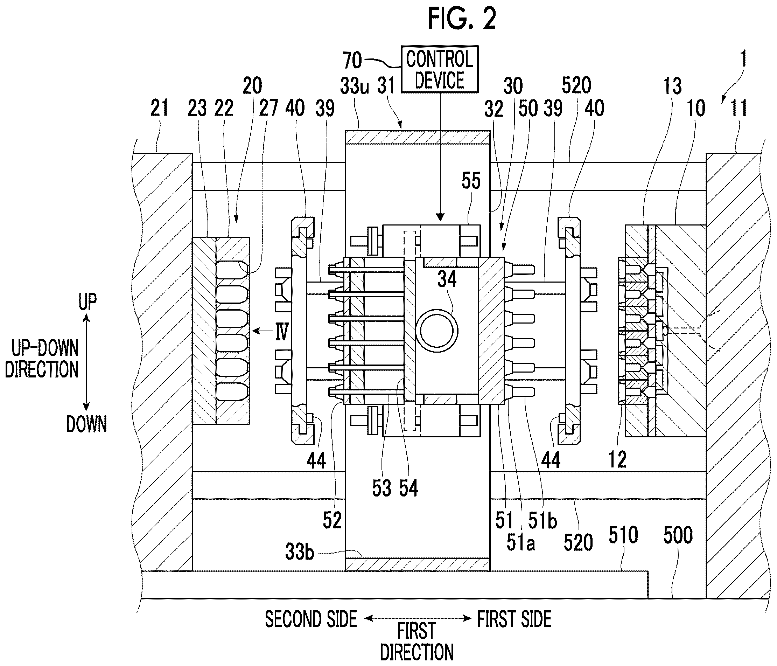

FIG. 2 is a view of an example of a cross section of the injection blow molding machine 1 according to the first embodiment as viewed in a second direction.

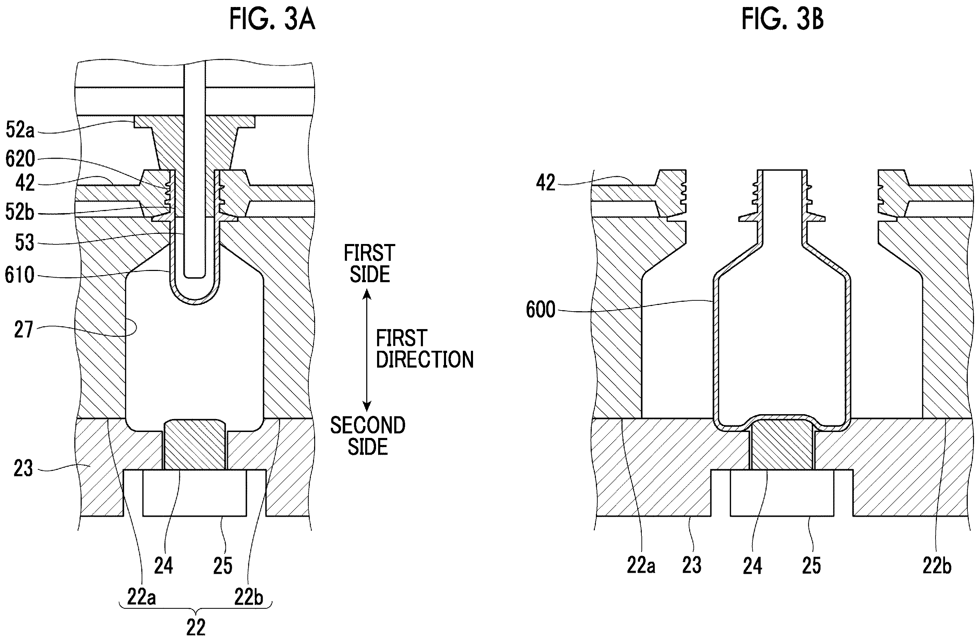

FIG. 3A is a view showing an example of a cross section before a final molding product 600 is molded. FIG. 3B is a view showing an example of a cross section after the final molding product 600 is molded.

FIGS. 1 and 2 show a state in which a stationary mold 10 and an injection core mold 51 are open resulting in a mold opening state. In addition, FIGS. 1, 2, and 3B show a state in which a drive-side movable portion 22a and a driven-side movable portion 22b of a movable blow split mold 22 are open, and the movable blow split mold 22 and a blow guide 52 are open, resulting in a mold opening state.

The injection blow molding machine 1 is an apparatus that performs injection molding and blow molding. The injection blow molding machine 1 molds, by the injection molding, a preform 610 having, for example, a test tube shape, which is an intermediate molding product, and molds a final molding product 600 such as a container by blowing high-pressure air into the inside of the preform 610 to expand the preform 610 by the blow molding.

The injection blow molding machine 1 includes the stationary mold 10, a movable mold 20 that is movable with respect to the stationary mold 10, and an intermediate mold 30 that is disposed between the stationary mold 10 and the movable mold 20. The injection blow molding machine 1 performs the injection molding at an injection station between the stationary mold 10 and the intermediate mold 30 by mold-closing the stationary mold 10 and the intermediate mold 30. In addition, the injection blow molding machine 1 performs the blow molding at a blow station between the intermediate mold 30 and the movable mold 20 by mold-closing the intermediate mold 30 and the movable mold 20. Hereinafter, the movement direction (in other words, a left-right direction in FIGS. 1 and 2) of the movable mold 20 with respect to the stationary mold 10 may be referred to as a "first direction". In addition, in the first direction, there is a case where a side where the stationary mold 10 is disposed is referred to as a "first side" and a side where the movable mold 20 is disposed is referred to as a "second side". In addition, the injection blow molding machine 1 is disposed such that the up-down direction in FIG. 2 is a vertical direction. Hereinafter, the up-down direction in FIG. 2 may be simply referred to as an "up-down direction". In addition, a direction (in other words, the up-down direction in FIG. 1) perpendicular to the first direction and the up-down direction may be referred to as a "second direction".

The injection blow molding machine 1 includes a stationary platen 11 fixed to a frame 500 fixed to a floor to hold the stationary mold 10, and a movable platen 21 slidably attached to a guide member 510 on the frame 500 to hold the movable mold 20. In addition, the injection blow molding machine 1 includes an intermediate mold support frame 31 that supports the intermediate mold 30 and is slidably attached to a guide member 510 between the stationary platen 11 and the movable platen 21.

In addition, the injection blow molding machine 1 includes an injection device (not shown) that injects resin into a cavity formed between the stationary mold 10 and the intermediate mold 30 on a side opposite to the stationary mold 10 with respect to the stationary platen 11.

In addition, the injection blow molding machine 1 includes a mold clamping device (not shown) on a side opposite to the movable mold 20 with respect to the movable platen 21. The mold clamping device has a mold clamping cylinder device (not shown) for driving the movable platen 21 and a support plate (not shown) to which the mold clamping cylinder device is attached. The support plate and the stationary platen 11 are connected to each other by a plurality (for example, four) of tie bars 520.

The stationary platen 11 is fixed to the frame 500 by bolts or the like. The movable platen 21 and the intermediate mold support frame 31 are mainly supported from below by the guide member 510 and move in the first direction along the tie bars 520.

In addition, the injection blow molding machine 1 includes a cavity plate 13 having a plurality of female mold portions 12. In the present embodiment, a total of twelve female mold portions 12 are provided to form two rows each having six female mold portions 12 arranged in the up-down direction, and the cavity plate 13 having the twelve female mold portions 12 is attached to the stationary mold 10.

The movable mold 20 has the movable blow split mold 22, a first bottom mold 23, a second bottom mold 24, and a suction device 25 that suctions the final molding product 600.

The movable blow split mold 22 has the drive-side movable portion 22a and the driven-side movable portion 22b that are disposed to face each other. The drive-side movable portion 22a and the driven-side movable portion 22b are moved in the second direction by a split mold driving cylinder device 26 to be brought into close contact with each other or to be separated from each other. A blow molding female mold 27 is formed by bringing the drive-side movable portion 22a and the driven-side movable portion 22b into close contact with each other. In the present embodiment, the blow molding female molds 27 is formed by arranging six sets of the drive-side movable portion 22a and the driven-side movable portion 22b arranged in the up-down direction, and two sets of the drive-side movable portions 22a and the driven-side movable portions 22b are disposed side by side in the second direction. The drive-side movable portion 22a is connected to a piston rod 26a of the split mold driving cylinder device 26, and is directly moved by the split mold driving cylinder device 26. The driven-side movable portion 22b is connected to the drive-side movable portion 22a of another set, and is moved in the second direction to come into contact with or separate from the drive-side movable portion 22a of its own set. For example, the split mold driving cylinder device 26 can be exemplified as a pneumatic cylinder device.

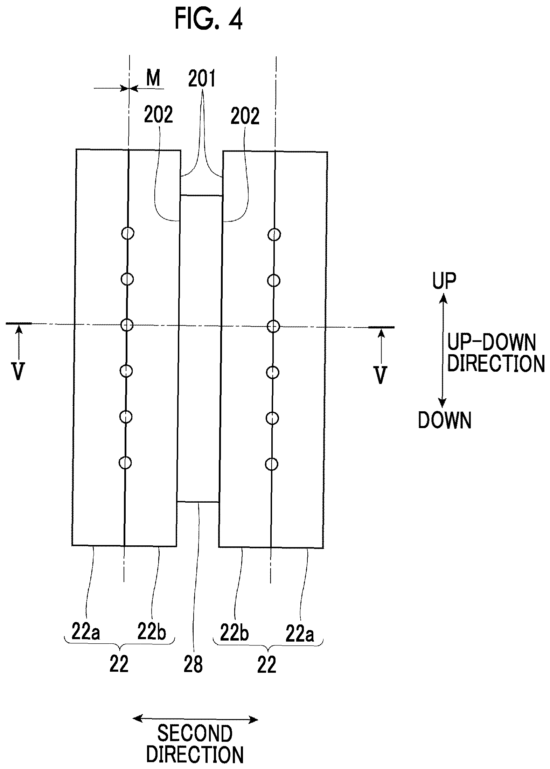

The movable mold 20 according to the present embodiment has an interposed member 28 (see FIGS. 4, 5, and 6) that is interposed between one set of driven-side movable portions 22b and the other set of driven-side movable portions 22b when the drive-side movable portion 22a and the driven-side movable portion 22b are brought into close contact with each other to form the blow molding female mold 27 and the blow molding is performed. The interposed member 28 will be described in detail below.

The first bottom mold 23 is attached to the movable platen 21. A through-hole 23a penetrating in the first direction is formed in the first bottom mold 23. The through-hole 23a is disposed on an extension line of the center line of the final molding product 600 in a state in which the drive-side movable portion 22a and the driven-side movable portion 22b are mold-closed, and forms a space in which the second bottom mold 24 can be disposed. A recessed portion 23b recessed from a contact surface of the first bottom mold 23 with the movable blow split mold 22 is formed around the through-hole 23a.

The second bottom mold 24 is a columnar member, and is disposed in the through-hole 23a of the first bottom mold 23. The second bottom mold 24 is disposed to slightly protrude from the recessed portion 23b of the first bottom mold 23 to the first side in the first direction. The diameter of the second bottom mold 24 is slightly smaller than the diameter of the through-hole 23a of the first bottom mold 23. Therefore, a gap is formed between the first bottom mold 23 and the second bottom mold 24 in a state in which the second bottom mold 24 is disposed in the through-hole 23a.

The suction device 25 is composed of a vacuum pump or the like, and suctions the final molding product 600. Specifically, the suction device 25 suctions the final molding product 600 by using a gap formed between the first bottom mold 23 and the second bottom mold 24 as a passage for air during suction.

The intermediate mold 30 has a rotating frame 35 that is rotatably attached to the intermediate mold support frame 31, and a core mold frame 50 that is non-rotatably attached to the intermediate mold support frame 31.

Here, the intermediate mold support frame 31 includes rectangular parallelepiped leg portions 32 that are disposed at both end portions in the second direction and are molded such that the up-down direction is a longitudinal direction and the first direction is a short direction, a top plate portion 33u that connects upper portions of the both leg portions 32, and a bottom portion 33b that connects lower portions of both the leg portions 32. A cylindrical support column 34 that is attached to penetrate the leg portion 32 in the second direction is fixed to a central portion of each of the leg portions 32 in the up-down direction. In addition, a through-hole (not shown) in the first direction through which the tie bar 520 passes is formed in the upper portion and the lower portion of each of the leg portions 32.

The rotating frame 35 is attached to the outer periphery of the support column 34 via a bearing member 36 such as a ball bearing, and is rotatable with respect to the intermediate mold support frame 31 with the center line of the support column 34 as a rotation center. In addition, in the present embodiment, an annular driven gear 37 is attached to a side surface of the rotating frame 35, and a drive gear 38b attached to a rotary shaft 38a of an electric motor 38 meshes with the driven gear 37. Accordingly, the rotating frame 35 rotates around the support column 34 by the operation of the electric motor 38.

The intermediate mold 30 has a plurality of guide bars 39 attached to the rotating frame 35 to extend in the first direction, and a gripping frame 40 attached to the guide bars 39 to be slidable in the first direction. In the present embodiment, the intermediate mold 30 has one guide bar 39 at each of an upper portion and a lower portion, which is each of both end portions in the second direction, at a first-side end portion of the rotating frame 35 in the mold opening state shown in FIGS. 1 and 2. In addition, a second-side end portion of the rotating frame 35 has one guide bar 39 at the upper portion and the lower portion, which is each of both end portions in the second direction. That is, the intermediate mold 30 according to the present embodiment has a total of eight guide bars 39. However, the intermediate mold 30 may have four guide bars extending to both sides of the stationary mold 10 side and the movable mold 20 side at each of the upper portion and the lower portion, which is each of both end portions in the second direction.

In the state shown in FIGS. 1 and 2, one gripping frame 40 is provided at each of both end portions of the rotating frame 35 in the first direction. The gripping frame 40 is slidably attached to the four guide bars 39 provided on the same side with respect to the center line of the support column 34. The gripping frame 40 has a gripping device 41 that molds or grips an opening portion 620 of the final molding product 600. The gripping device 41 has a screw split mold 42 that molds or grips the opening portion 620, a slide plate 43 to which the screw split mold 42 is attached, and a gripping release member 44 that releases the gripping of the opening portion 620. The gripping release member 44 is driven by a gripping release driving device (not shown). The screw split mold 42 molds the opening portion 620 in a mold closed state during the injection molding and grips the opening portion 620 in the mold closed state during the blow molding. In addition, the screw split mold 42 releases the opening portion 620 by performing mold opening after the blow molding is completed.

More specifically, the screw split mold 42 has a configuration that can be split in the second direction, and each half-split portion of the screw split mold 42 is attached to each half-split portion of the slide plate 43. In addition, the half-split portion of the slide plate 43 is attached to the gripping frame 40 to be slidable in the second direction. The gripping release member 44 includes a configuration that can be split in the second direction, and each of the half-split portions of the gripping release members 44 is attached to the half-split portion of the slide plate 43. When the gripping release member 44 is pushed apart in the second direction, the half-split portions of the slide plate 43 and the half-split portions of the screw split mold 42 are also pushed apart in the second direction and split. Accordingly, at the blow station, the gripping of the opening portion 620 of the final molding product 600 is released after the blow molding is completed.

In the present embodiment, the screw split mold 42 is provided at a position corresponding to the female mold portion 12 and the blow molding female mold 27 of the movable blow split mold 22, which are attached to the stationary mold 10. That is, the screw split molds 42 form two rows each having six screw split molds arranged in the up-down direction in the state shown in FIGS. 1 and 2.

The core mold frame 50 is fixed to the support column 34, and is non-rotatably attached to the intermediate mold support frame 31.

An injection core mold 51 is attached to a surface of the core mold frame 50 on the stationary platen 11 side, and a blow guide 52 is attached to a surface of the core mold frame 50 on the movable platen 21 side.

The injection core mold 51 has a base portion 51a and a male mold portion 51b, and forms a cavity having the shape of the preform 610 between the injection core mold 51 and the female mold portion 12 in the mold closed state.

The blow guide 52 includes a base portion 52a, and forms a blow molding space having a shape of the final molding product 600 in the mold closed state by being brought into close contact with an inlet of the blow molding female mold 27 formed by the drive-side movable portion 22a and the driven-side movable portion 22b being brought into close contact with each other.

In addition, the intermediate mold 30 has a stretching rod 53 that can protrude from a base portion 52a of the blow guide 52, a connecting plate 54 to which base portions of a plurality of the stretching rods 53 are attached, and a stretching rod driving device 55 for protruding the stretching rod 53. For example, the stretching rod driving device 55 can be exemplified as a pneumatic cylinder device. For example, the stretching rod driving device 55 can be exemplified as being attached to an outer surface of an upper portion and an outer surface of a lower portion of the core mold frame 50. The connecting plate 54 is connected to a piston rod of the stretching rod driving device 55. When the stretching rod driving device 55 operates, the connecting plate 54 connected to the piston rod moves, and the stretching rod 53 protrudes into the preform 610. In the present embodiment, the final molding product 600 is molded from the preform 610 by stretching blow molding in which blow molding is performed by protruding the stretching rod 53 into the preform 610 and blowing high-pressure air into the preform 610 while the preform 610 is stretched.

In addition, the injection blow molding machine 1 includes an intermediate mold driving cylinder device 15 that moves the intermediate mold support frame 31 in the first direction with respect to the stationary platen 11, and a connecting rod 16 connected to a piston rod of the intermediate mold driving cylinder device 15. The intermediate mold driving cylinder device 15 is fixed to the stationary platen 11, and the connecting rod 16 is attached to the intermediate mold support frame 31. The intermediate mold driving cylinder device 15 is operated to move the intermediate mold support frame 31 with respect to the stationary platen 11. Accordingly, the injection blow molding machine 1 can perform the injection molding and the blow molding by performing the mold closing, the mold clamping, and the mold opening at separate timings at the injection station and the blow station.

In addition, the injection blow molding machine 1 has a control device 70 that controls the injection blow molding machine 1. The control device 70 includes a central processing unit (CPU) (not shown), a read only memory (ROM) (not shown) that is a storage area for storing a program, and a random access memory (RAM) (not shown) that is an execution area of the program. The control device 70 realizes various functions by causing the CPU to execute a program stored in a ROM or a storage device such as a hard disk drive (HDD) or a semiconductor memory. The control device 70 controls the operations of the injection device (not shown), the mold clamping device (not shown), the split mold driving cylinder device 26, an interposed member driving cylinder device (not shown) to be described below, the electric motor 38, the gripping release driving device (not shown), the stretching rod driving device 55, and the like. Hereinafter, the operation of the injection blow molding machine 1 performed based on the control by the control device 70 will be described.

### (Operation)

The injection blow molding machine 1 according to the present embodiment molds twelve preforms 610 equal to the number the female mold portions 12 by the injection molding at the injection station in one molding cycle. In addition, the injection blow molding machine 1 performs, at the blow station, the blow molding by using the number of preforms 610 molded at the injection station in the previous molding cycle, and molds twelve final molding products 600.

First, the mold clamping device (not shown) operates from a state in which the mold opening is performed at the injection station and the blow station shown in FIGS. 1 and 2, and the mold closing is started. Accordingly, the movable platen 21 moves from the mold opening state to the mold closed state, that is, moves to approach the stationary platen 11. Then, while the movable platen 21 moves from the mold opening state to the mold closed state, the intermediate mold driving cylinder device 15 operates, and the intermediate mold support frame 31 moves from the mold opening state to the mold closed state, that is, moves to approach the stationary platen 11.

Before the movable platen 21 moves from the mold opening state to the mold closed state, the split mold driving cylinder device 26 operates to move and close the drive-side movable portion 22a and the driven-side movable portion 22b in the second direction to form the blow molding female mold 27.

Then, when the movable platen 21 is in the mold closed state, the mold closing is completed at the injection station and the blow station. In this case, the gripping frame 40 at the injection station and the blow station is in contact with the core mold frame 50.

In this case, at the injection station, each of the male mold portions 51b enters each of the female mold portions 12 attached to the stationary mold 10. In addition, a cavity is formed between the inner surfaces of the female mold portion 12 and the screw split mold 42 and an outer surface of the male mold portion 51b. Then, the resin injected by the injection device is filled in the cavity. Even after the filling of the resin is completed, the mold closed state continues, and the resin in the cavity is cooled.

In addition, at the blow station, as shown in FIG. 3A, the screw split mold 42 gripping the opening portion 620 of the preform 610 is pressed against the opening portion of the blow molding female mold 27 formed by the drive-side movable portion 22a and the driven-side movable portion 22b. Accordingly, the flange portion of the preform 610 is pressed against an outer surface of the opening portion of the blow molding female mold 27, and a portion of the preform 610 beyond the flange portion enters the blow molding female mold 27. In addition, a tip part 52b of the base portion 52a of the blow guide 52 enters the opening portion 620 of the preform 610. Then, the stretching rod driving device 55 operates, and the stretching rod 53 protrudes toward the deep side of the blow molding female mold 27. At the same time, high-pressure air is blown into the inside of the preform 610, so that the preform 610 is expanded and pressed against an inner surface of the blow molding female mold 27. Accordingly, as shown in FIG. 3B, a vial-shaped or bottle-shaped bottomed container having a shape of the inner surface of the blow molding female mold 27 is molded as the final molding product 600. When the stretching is completed, the stretching rod 53 is returned to its original position from the protruding state. Then, when the blow molding is completed, a mold clamping force applied to the movable platen 21 by the mold clamping device is released.

Thereafter, the movable platen 21 moves in a direction away from the core mold frame 50 while maintaining a positional relationship between the drive-side movable portion 22a and the driven-side movable portion 22b, and the gripping device 41. Then, when a predetermined gap is formed between the screw split mold 42 and the blow guide 52, the drive-side movable portion 22a and the driven-side movable portion 22b move in the second direction. In addition, the screw split mold 42 is pushed apart and opened in the second direction, thereby releasing the opening portion 620. Then, when the spacing between the drive-side movable portion 22a and the driven-side movable portion 22b is at least larger than the outer diameter of the final molding product 600, the final molding product 600 falls downward from between the drive-side movable portion 22a and the driven-side movable portion 22b. The final molding product 600 is discharged below the injection blow molding machine 1 and is housed in a housing device (not shown).

Thereafter, the intermediate mold driving cylinder device 15 operates, and the intermediate mold support frame 31 moves from the mold closed state to the mold opening state, that is, moves away from the stationary platen 11. Since the core mold frame 50 also moves together with the intermediate mold support frame 31, the male mold portion 51b is removed from the female mold portion 12 attached to the stationary mold 10. Subsequently, when the intermediate mold support frame 31 further moves away from the stationary platen 11, the gripping frame 40 also moves together. Thus, the screw split mold 42 is removed from the female mold portion 12. In this case, since the half-split portions of the screw split mold 42 are biased in the center direction by a biasing member and are coupled to each other, the opening portion 620 of the preform 610 is gripped.

Accordingly, the gripping frame 40 at the injection station reaches a position away from the stationary mold 10 in a state in which the screw split mold 42 has gripped all the twelve preforms 610.

Subsequently, the electric motor 38 operates, and the rotating frame 35 is rotated about the center line of the support column 34. Accordingly, the gripping frame 40 in which the screw split mold 42 has gripped the preform 610 moves from the injection station to the blow station, and the other gripping frame 40 moves from the blow station to the injection station.

Then, when the rotation of the rotating frame 35 is completed, the mold opening is performed at the injection station and the blow station. Accordingly, one molding cycle is completed. Thereafter, the above-described operation is repeated and executed, and a predetermined number of molding cycles are repeated.

### (Interposed Member 28 of Movable Mold 20)

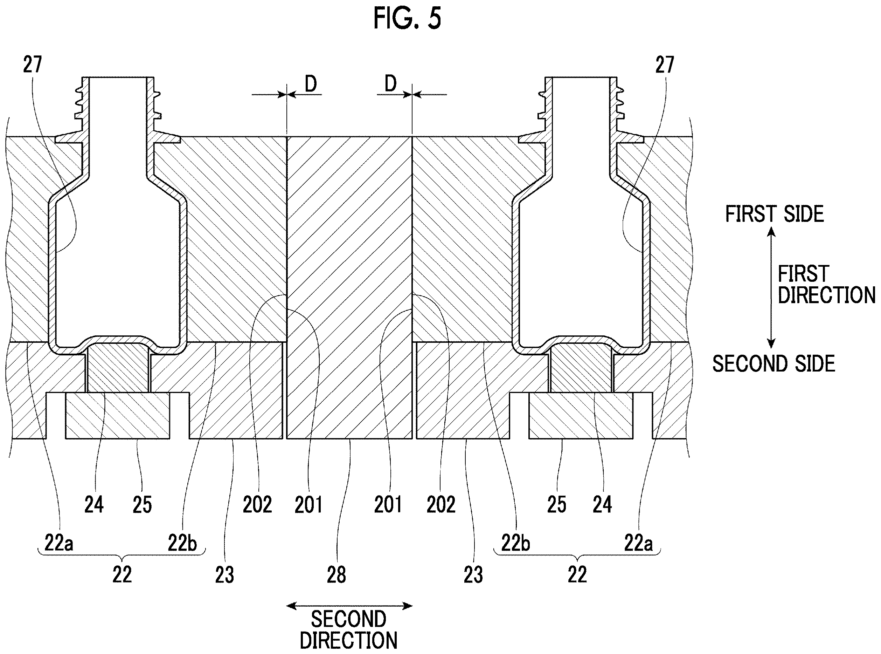

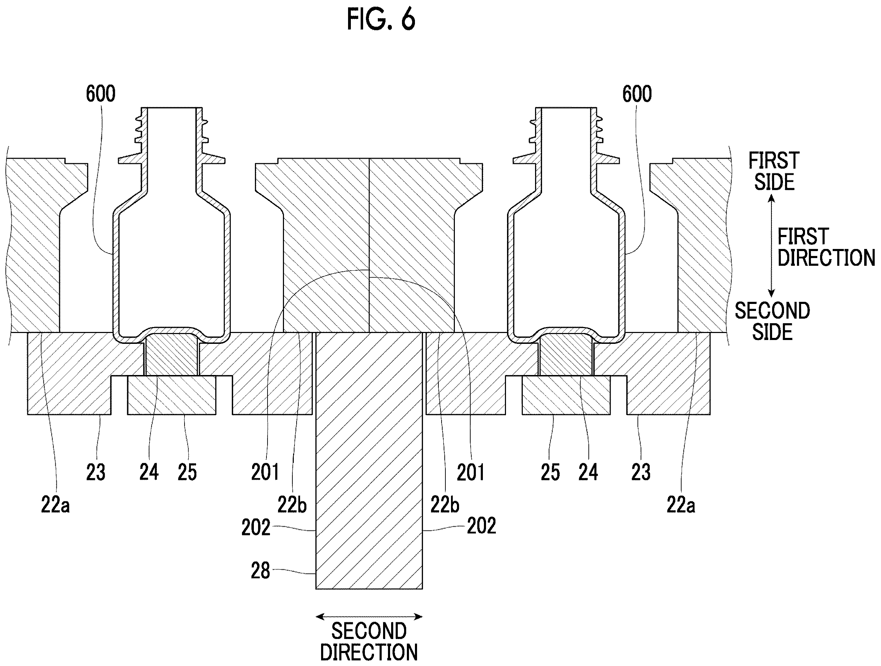

FIG. 4 is an example of a view of the injection blow molding machine 1 in the direction of an IV portion in FIG. 2. FIGS. 5 and 6 are views showing an example of a cross section of a V-V portion of FIG. 4. FIGS. 4 and 5 are views showing an example of an interposed state to be described below, and FIG. 6 is a view showing an example of a retreated state to be described below.

In the movable blow split mold 22 of the movable mold 20 according to the present embodiment, the drive-side movable portion 22a and the driven-side movable portion 22b are moved in the second direction by the split mold driving cylinder device 26 (see FIG. 1) to be brought into close contact with each other or to be separated from each other. Then, the drive-side movable portion 22a and the driven-side movable portion 22b are brought into close contact with each other, in other words, the drive-side movable portion 22a and the driven-side movable portion 22b are closed to form the blow molding female mold 27 for blow molding. In addition, the drive-side movable portion 22a and the driven-side movable portion 22b are separated from each other, in other words, the drive-side movable portion 22a and the driven-side movable portion 22b are opened, so that the final molding product 600 can fall downward from between the drive-side movable portion 22a and the driven-side movable portion 22b.

As shown in FIGS. 4 and 5, the outer shape of the movable blow split mold 22 is a rectangular parallelepiped shape, and the shape of the movable blow split mold 22 as viewed in the first direction is a rectangle in which the up-down direction is a longitudinal direction and the second direction is a short direction. Both end surfaces of the movable blow split mold 22 in the second direction are surfaces perpendicular to the second direction, respectively.

As shown in FIGS. 4 and 5, the interposed member 28 is interposed between the driven-side movable portion 22b of one set of movable blow split mold 22 of the two sets of movable blow split molds 22 and the driven-side movable portion 22b of the other set of movable blow split mold 22 in a case where the movable blow split molds 22 are closed. In addition, as shown in FIG. 6, in a case where the movable blow split molds 22 are open, the interposed member 28 retreats from between the driven-side movable portion 22b of one set of movable blow split mold 22 of the two sets of movable blow split molds 22 and the driven-side movable portion 22b of the other set of movable blow split mold 22. The interposed member 28 moves in the first direction to transit to a state (hereinafter, referred to as an "interposed state" in some cases) of being interposed between the two driven-side movable portions 22b and a state (hereinafter, referred to as a "retreated state" in some cases) of being retreated from between the two driven-side movable portions 22b.

The interposed member 28 is connected to a piston rod (not shown) of an interposed member driving cylinder device (not shown), and is moved in the first direction by the interposed member driving cylinder device. The interposed member driving cylinder device is attached to the first bottom mold 23 or the movable platen 21, and the piston rod is connected to the interposed member 28 through a through-hole formed in the first bottom mold 23. In addition, the interposed member 28 can exemplified as being positioned in a through-hole or a recessed portion formed in the first bottom mold 23 in the retreated state. The interposed member driving cylinder device can be exemplified as a pneumatic cylinder device, a hydraulic cylinder device, and a device using a ball screw or a toggle mechanism.

The interposed member 28 has a surface perpendicular to the second direction at each of both end portions in the second direction. Hereinafter, in the interposed state, there is a case where a surface of the driven-side movable portion 22b of the movable blow split mold 22 facing the interposed member 28 is referred to as a "first surface 201", and a surface of the interposed member 28 facing the first surface 201 is referred to as a "second surface 202". For example, the outer shape of the interposed member 28 is a rectangular parallelepiped shape, and as shown in FIG. 4, the shape of the interposed member 28 as viewed in the first direction can be exemplified as a rectangle in which the up-down direction is a longitudinal direction and the second direction is a short direction. However, although not shown, the interposed member 28 may be provided with a hole or a recessed portion, extending in the first direction, for allowing rail supporting the movement of the interposed member 28 in the first direction to be disposed therein. For example, the hole or the recessed portion extending in the first direction can be exemplified as being formed at a central portion in the up-down direction. The second surface 202 may be composed of one surface that is continuous in the up-down direction, or may be composed of a plurality of surfaces that are intermittently provided in the up-down direction. In a case where the second surface 202 is composed of the plurality of surfaces, it is desirable to have at least two surfaces, that is, a surface provided at an upper portion and a surface provided at a lower portion.

In the present embodiment, a gap D between the first surface 201 and the second surface 202 in the interposed state is as follows. That is, the gap D between the first surface 201 and the second surface 202 is set to any one of 0.03 (mm) or more and less than 0.09 (mm). Hereinafter, this will be described.

In the movable blow split mold 22 of the movable mold 20 according to the present embodiment, the drive-side movable portion 22a and the driven-side movable portion 22b are maintained in a mold closed state (in other words, a close contact state) by the split mold driving cylinder device 26 (refer to FIG. 1) that is a pneumatic cylinder device. Since the pneumatic cylinder device has a weaker force than the hydraulic cylinder device and the device using a ball screw or a toggle mechanism, a force for maintaining the movable blow split mold 22 in the mold closed state is also weak. Therefore, when high-pressure air is blown into the inside of the preform 610 via an airflow path, an air vent (not shown), or the like formed between the stretching rod 53 and the gripping device 41 during the blow molding, a gap is generated between the drive-side movable portion 22a and the driven-side movable portion 22b. Hereinafter, the gap between the drive-side movable portion 22a and the driven-side movable portion 22b may be referred to as a "gap M". When the gap M is large, burrs are generated in the final molding product 600. Therefore, in a case where the split mold driving cylinder device 26 is a pneumatic cylinder device, there is a high risk that the gap M has a dimension enough to generate burrs in the final molding product 600. Thus, in the present embodiment, in order to prevent the gap M from being so large that burrs are generated in the final molding product 600, the interposed member 28 is interposed between the two sets of movable blow split molds 22 during the blow molding to suppress the opening of the movable blow split mold 22.

On the other hand, in the blow molding, there is a possibility that poor appearance may be caused in the final molding product 600 when the air existing in the blow molding female mold 27 before high-pressure air is blown into the preform 610 is not discharged to the outside of the blow molding female mold 27. Therefore, in the present embodiment, in order to prevent the poor appearance from being caused in the final molding product 600, when high-pressure air is blown, air is released to the outside of the blow molding female mold 27 through the gap M.

From the viewpoint of preventing the gap M from being so large that burrs are generated in the final molding product 600, the gap D is preferably small in order to make the gap M small. This is for making it difficult to open the drive-side movable portion 22a and the driven-side movable portion 22b. On the other hand, from the viewpoint of using the gap M to release air so that the poor appearance is not caused in the final molding product, the gap D is preferably large in order to make the gap M large. This is for making it easy to open the drive-side movable portion 22a and the driven-side movable portion 22b.

In addition, when the gap D is small and when the interposed member 28 transits from the retreated state to the interposed state, there is a possibility that the second surface 202 of the interposed member 28 may come into contact with the first surface 201 of the movable blow split mold 22 and abrasive powder may be generated. In the present embodiment, since the final molding product 600 is configured to fall downward by its own weight from between the drive-side movable portion 22a and the driven-side movable portion 22b, there is a risk that the abrasive powder may adhere to the final molding product 600 located below. Therefore, it is preferable that the gap D is large in order to suppress the generation of the abrasive powder.

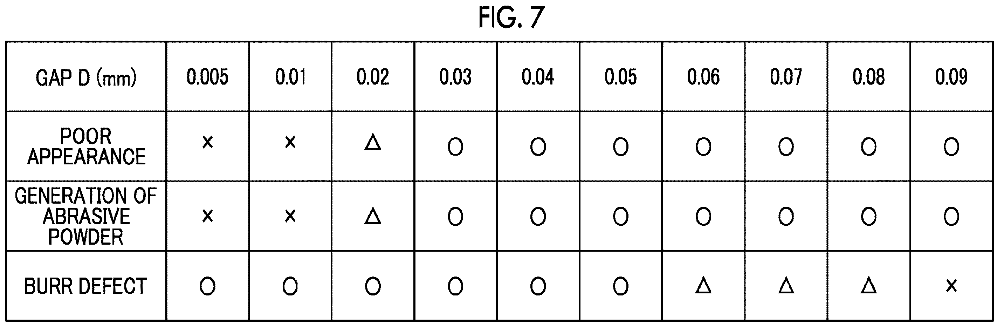

FIG. 7 is a view showing a relationship between the dimension of the gap D and each of the poor appearance, the generation of abrasive powder, and burr defects of the final molding product 600.

The present inventors and the like have examined how each of the poor appearance of the final molding product 600, the generation of abrasive powder, and the burr defects changes according to the dimension of the gap D. The final molding product 600 is a 110 (ml) bottle container for beverages, which is molded using polyethylene terephthalate (PET). It is considered that the final molding product 600 is a bottle container having a volume of 65 ml or more and 200 ml or less, and the same change as that shown in FIG. 7 occurs.

As shown in FIG. 7, when the gap D is 0.005 (mm) and 0.01 (mm), the poor appearance occurred in the final molding product 600. On the other hand, in a case where the gap D is 0.03 (mm) or more, no poor appearance occurred in the final molding product 600. In a case where the gap D is 0.02 (mm), there was the final molding product 600 in which no poor appearance occurred, and there was also the final molding product 600 in which the poor appearance occurred. From the above, from the viewpoint of using the gap M to release air so that the poor appearance does not occur in the final molding product 600, the gap D is preferably 0.03 (mm) or more. This is because it is considered that in a case where the gap D is less than 0.03 (mm), it is difficult for the gap M to have a dimension enough to release air.

As shown in FIG. 7, in a case where the gap D is 0.005 (mm) and 0.01 (mm), the abrasive powder was generated. On the other hand, in a case where the gap D is 0.03 (mm) or more, the abrasive powder was not generated. In a case where the gap D is 0.02 (mm), there is a case where the abrasive powder is not generated, and there is also a case where the abrasive powder is generated. From the above, the gap D is preferably 0.03 (mm) or more from the viewpoint of preventing the generation of the abrasive powder. This is because it is considered that the abrasive powder may be generated in a case where the gap D is less than 0.03 (mm).

As shown in FIG. 7, in a case where the gap D is 0.09 (mm) or more, burrs were generated. On the other hand, in a case where the gap D is 0.05 (mm) or less, no burrs were generated. In a case where the gap D is 0.06 (mm) or more and less than 0.09 (mm), there is the final molding product 600 in which no burrs were generated, and there is also the final molding product 600 in which burrs were generated. However, in a case where the gap D is 0.06 (mm) or more and less than 0.09 (mm), the dimension of the burrs generated in the final molding product 600 is smaller than the dimension of the burrs generated in the final molding product 600 in a case where the gap D is 0.09 (mm) or more. From the above, from the viewpoint of preventing the generation of burrs, the gap D is preferably less than 0.09 (mm) and more preferably less than 0.06 (mm).

As described above, the movable mold 20 includes a plurality of sets of movable blow split molds 22 disposed side by side in the second direction (an example of the opening and closing direction), one set of movable blow split mold 22 being closed to form the blow molding female mold 27 for blow molding. The movable blow split mold 22 is opened to allow the final molding product 600 to be removed therefrom. In addition, the movable mold 20 includes the interposed member 28 that is interposed between the movable blow split mold 22 of one set of movable blow split mold 22 of a plurality of sets of movable blow split molds 22 and the other set of movable blow split mold 22 when the movable blow split molds 22 are closed.

In the movable mold 20 configured as described above, the interposed member 28 suppresses the movement of the movable blow split mold 22. Thus, even when high-pressure air is blown into the inside of the blow molding female mold 27 during the blow molding, the gap M is unlikely to be formed between the drive-side movable portion 22a and the driven-side movable portion 22b. Therefore, it is possible to suppress the generation of burrs in the final molding product 600. Even when the movable blow split mold 22 is opened and closed by the pneumatic cylinder device, the interposed member 28 suppresses the opening of the movable blow split mold 22.

The movable blow split mold 22 is opened in a case where the interposed member 28 is retreated in a direction (for example, the first direction) intersecting the second direction. Accordingly, when the final molding product 600 is caused to fall, the interposed member 28 is in the retreated state, so that the movable blow split mold 22 can be opened.

In a case where the movable blow split mold 22 is closed, the gap D between the movable blow split mold 22 and the interposed member 28 is preferably 0.03 (mm) or more and less than 0.09 (mm). By setting the gap D to 0.03 (mm) or more and less than 0.09 (mm), it is possible to suppress the generation of burrs while suppressing the poor appearance and the generation of abrasive powder in the final molding product 600.

Furthermore, the gap D is more preferably 0.03 (mm) or more and 0.05 (mm) or less. Accordingly, the generation of burrs can be more accurately suppressed.

In addition, in the movable mold 20 according to the present embodiment, there are two sets of movable blow split molds 22, and the interposed member 28 is interposed between the two sets of movable blow split mold 22. That is, the opening of the two sets of movable blow split molds 22 can be suppressed by one interposed member 28. In a case where there are more than four even-numbered sets of movable blow split molds 22, similarly, one interposed member 28 may be disposed between two sets of the movable blow split mold 22, and it is not necessary to dispose one movable blow split mold 22 in each of all the sets.

### Brief Description of the Reference Symbols

1: Injection blow molding machine
10: Stationary mold
11: Stationary platen
20: Movable mold (example of mold device)
21: Movable platen
22: Movable blow split mold
22a: Drive-side movable portion
22b: Driven-side movable portion
27: Blow molding female mold
28: Interposed member
600: Final molding product

## Claims

1. A mold device (20) comprising:
a plurality of sets of blow split molds (22) that are disposed side by side in an opening and closing direction, in which one set of blow split mold (22), when closed, forms a blow molding female mold (27) for blow molding, and, when opened, allows a molding product (600) to be removed therefrom; and
an interposed member (28) that is interposed between one set of blow split mold (22) of the plurality of sets of blow split molds (22) and the other set of blow split mold (22) of the plurality of sets of blow split molds (22) in a case where the blow split mold (22) is closed.

2. The mold device (20) according to claim 1,
wherein the blow split mold (22) is opened in a case where the interposed member (28) is retreated in a direction intersecting the opening and closing direction.

3. The mold device (20) according to claim 1,
wherein a gap between the blow split mold (22) and the interposed member (28) in a case where the blow split mold (22) is closed is 0.03 (mm) or more and less than 0.09 (mm) .

4. The mold device (20) according to claim 3,
wherein a gap between the blow split mold (22) and the interposed member (28) in a case where the blow split mold (22) is closed is 0.03 (mm) or more and 0.05 (mm) or less.

5. The mold device (20) according to claim 1,
wherein the blow split mold (22) is opened and closed by a pneumatic cylinder device.

6. The mold device (20) according to claim 1,
wherein there are two sets of the blow split molds (22), and the interposed member (28) is interposed between the two sets of blow split molds (22).
